# EUROPEAN PATENT SPECIFICATION

(11) **EP 4 419 454 B1**
(45) Date of publication and mention of the grant of the patent: **10.12.2025**
(21) Application number: 22802706.6
(22) Date of filing: 17.10.2022
(51) Int. Cl.: B65G 21/22, B65G 39/02, F16C 13/00, B65B 11/00, B65B 11/02

(54) **HORIZONTAL WRAPPING MACHINE**
HORIZONTALE VERPACKUNGSMASCHINE
MACHINE D'EMBALLAGE HORIZONTALE

(30) Priority: 19.10.2021 IT 202100026789
(43) Date of publication of application: 28.08.2024
(73) Proprietor: Robopac S.p.A., 47892 Acquaviva Gualdicciolo (SM)
(72) Inventor: STELLA, Stefano, 47892 Acquaviva - Gualdicciolo (SM) (IT); DELBALDO, Luca, 47892 Acquaviva - Gualdicciolo (SM) (IT)
(74) Representative: Cicconetti, Andrea
(86) International application number: PCT/IB2022/059925
(87) International publication number: WO 2023/067467

(56) References cited:
- EP-A1- 1 963 188
- EP-B1- 1 963 188
- WO-A1-2006/051281
- CN-A- 111 591 488
- DE-A1- 102008 030 117
- DE-U1- 202017 100 489
- DE-U1- 29 715 615
- US-A- 5 433 058
- US-A1- 2012 180 430
- ANONYMOUS: "Konkave Laufrollen - DEC GmbH, Ihr Partner für Laufrollen, Kunststoffteile, Drehteile und Stanzteile.", 8 September 2019 (2019-09-08), decgmbh.de, XP055928631, Retrieved from the Internet <URL:https://web.archive.org/web/20190908081839/http://decgmbh.de/index.php/laufrollen/konkave-laufrollen/> [retrieved on 20220607]

## Description

The invention relates to machines for wrapping products with a film of plastic material, and in particular, to concerns a horizontal wrapping machine suitable for wrapping a product or article with an extensible plastic film.

The known horizontal wrapping machines comprise a vertical rotating ring structure, or rotating ring, that rotates about an horizontal rotation axis and that supports a unit for unwinding or dispensing a film that is provided with a film reel, and a transporter or conveyor that supports and moves linearly and horizontally a product, an article, an object to be wrapped through the rotating ring so that it is wrapped with the film dispensed by the unwinding unit.

Thanks to the combination of the linear and horizontal movement of the product and the rotation of the unwinding unit, fixed to the rotating ring, around the product, during the wrapping cycle the film that is unwound from the reel, is wrapped around the moving product in order to form a series of overlapping strips or bands with an almost helical pattern. The unwinding unit, in addition to supporting the film reel, is generally provided with a series of rollers that unwind the film from the reel and pull and/or stretch or elongate the film.

The rotating ring is rotatably supported by a main frame of the machine by means of a plurality of supporting wheels or rollers that engage with an external peripheral edge of the rotating ring. The supporting rollers are mounted idle, i.e. free to rotate, on the main frame, angularly spaced apart from one another with respect to the rotation axis. Each supporting roller comprises a cylindrical body that abuts an external cylindrical wall of the external peripheral edge of the rotating ring and a pair of flanges or shoulders that abut the opposite flat vertical walls of the rotating ring. In this way, the supporting rollers, in addition to radially support and constrain the rotating ring, thanks to the flanges also prevent the axial displacement of the rotating ring, that is, parallel to the rotation axis.

Alternatively, there are known horizontal wrapping machines comprising a first set of rollers or rolls arranged to radially support the rotating ring and a second set of rollers to axially support the rotating ring. The rollers of the first series abut the external cylindrical wall of the external peripheral edge of the ring, while the rollers of the second series abut the opposite flat vertical walls of the ring at its external peripheral edge.

The supporting wheels or rollers are generally made of a material with a low coefficient of friction and with a hardness lower than the hardness of the material with which the rotating ring is made. The rotating ring is generally made of a metal alloy, in particular iron, steel, aluminium, while the rollers are made of plastic material, for example PVC.

Generally, the rotating rings are rotated by a motorized friction wheel or roller that abuts the external annular edge of the ring by transferring the rotation movement thereto by friction. Horizontal wrapping machines are also known in which the rotating ring is rotated by means of a belt or band that engages a groove made on the external peripheral edge of the rotating ring. The belt is driven by a motorized pulley or wheel.

CN 111 591 488 A discloses a wrapping machine with a ring-shaped turntable rotatably supported by driven wheels on a frame so that the turntable can rotate about a horizontal wrapping axis. Drive means for rotating the turntable comprise a drive belt. The turntable comprises two ring-shaped plates both having a peripheral edge. The peripheral edge of one of the plates engages a U-shaped grove of the driven wheel. A stretch film dispenser is attached to the turntable.

A drawback of the known horizontal wrapping machines provided with supporting wheels or rollers having lateral shoulders lies in that also due to the play (between the lateral shoulders and the external peripheral edge of the rotating ring) the rollers are subject to a quick wear that causes generation of plastic residues, which can get the machine and the products dirty during wrapping, and also requires frequent maintenance interventions for replacement of deteriorated rollers.

Furthermore, the wear of the rollers causes a further increase of the play in the coupling between the roller and the external annular edge of the rotating ring that causes vibrations, oscillations and noise thereof during rotation.

Horizontal wrapping machines provided with a first set of rollers and a second set of rollers to support the rotating ring respectively radially and axially have a more complex and expensive structure to be built and assembled.

An object of the present invention is to improve the horizontal wrapping machines arranged to wrap products, articles, and objects with a plastic film.

Another object is to produce a wrapping machine provided with a rotating ring for supporting the film unwinding unit that has regular and precise operation over time, free from vibrations and oscillations.

A further object is to provide a wrapping machine equipped with a rotating ring for supporting the unwinding unit that requires occasional maintenance works.

These and further objects are achieved by a wrapping machine according to one or more of the claims set out below.

The invention can be better understood and implemented with reference to the attached drawings which illustrate some exemplary and non-limiting embodiments thereof, in which:
- figure 1 is a side view of the wrapping machine of the invention;
- figure 2 is a section according to line II-II of figure 1;
- figure 3 is a perspective view of a rotating ring of the wrapping machine of figure 1 provided with a film unwinding unit and associated to supporting wheels and drive means;
- figure 4 is a front view of the rotating ring of figure 3;
- figure 5 is an enlarged side view of the rotating ring, the film unwinding unit, the supporting wheels and the drive means of figure 3;
- figure 6 is a section according to line VI-VI of figure 4;
- figure 7 is an enlarged section illustrating in particular a guide groove of the supporting wheel and a first annular portion of said external peripheral edge in a detached configuration.

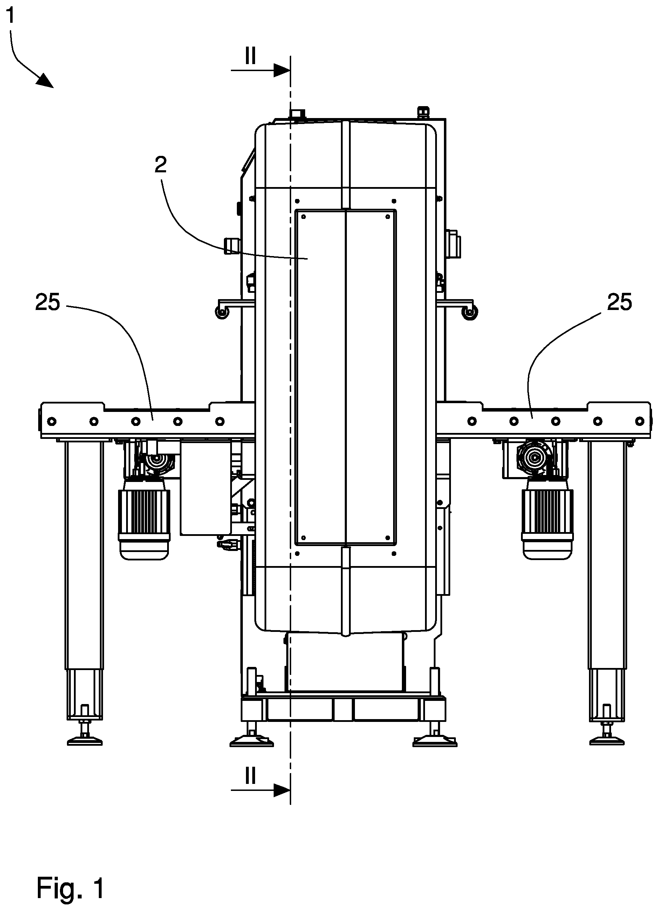

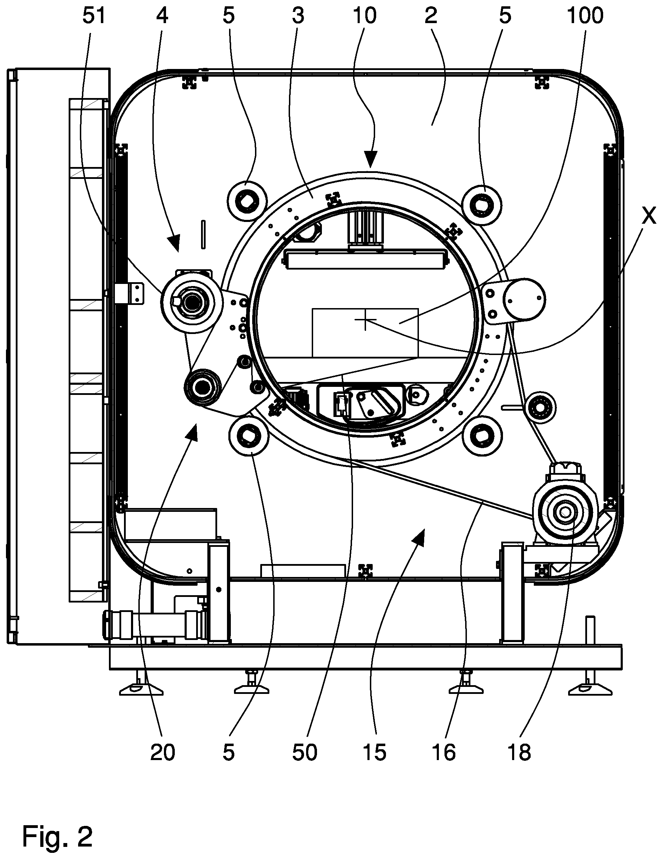

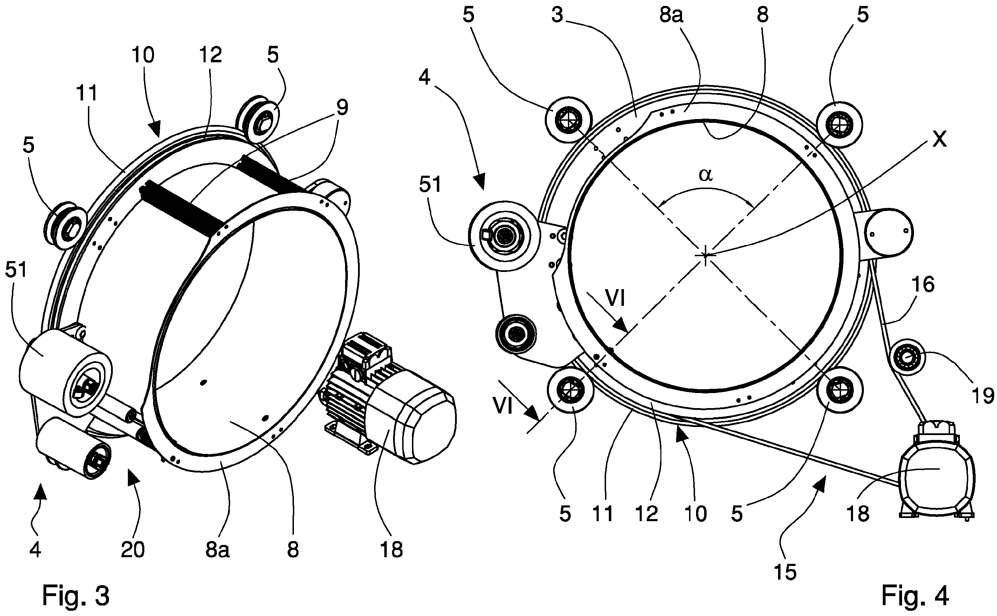

With reference to Figures 1 to 7, the wrapping machine 1 according to the invention is illustrated that is arranged for wrapping a film 50 around a product 100 and comprises a supporting frame 2, a rotating ring 3 rotatably supported by the supporting frame 2 so as to rotate about a substantially horizontal wrapping axis X, a plurality of supporting wheels 5 fixed to the supporting frame 2 free to rotate, i.e. idle, and configured to rotatably support the rotating ring 3 by engaging an external peripheral edge 10 thereof and an unwinding unit 4 supporting a reel 51 of film and provided with roller means 20 to unwind the film 50. The supporting wheels 5 are fixed to the supporting frame 2 rotating about respective rotation axes that are parallel to the wrapping axis X.

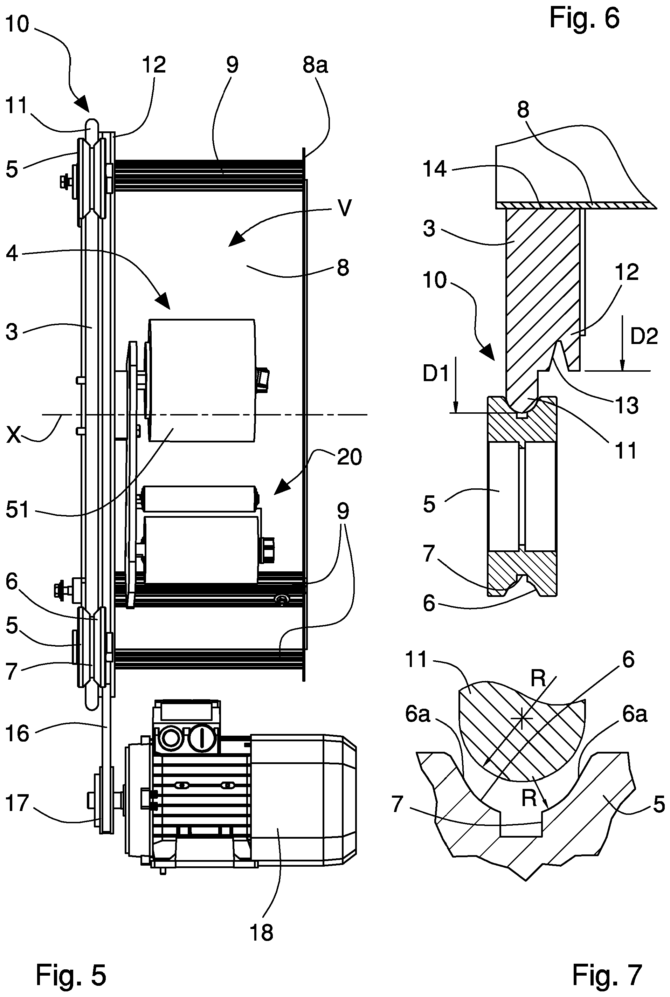

With particular reference to figures 6 and 7, each supporting wheel 5 comprises an annular guide groove 6, i.e. made on the external circumference of the supporting wheel 5, having an almost semi-circular cross section and suitable for receiving and engaging a first annular portion 11 of the external peripheral edge 10, which has a cross section with a substantially semi-circular shape and complementary to the cross section of the guide groove 6. By cross section of the supporting wheel 5 and of the peripheral edge 10 of the rotating ring 3 is meant the section according to a plane passing through the rotation axis of the supporting wheel 5 and the rotation axis (wrapping axis X) of the rotating ring 3. More precisely, the guide groove 6 has a semi-circular concave shape with a radius of curvature R equal to that one of the first annular portion 11 having a semi-circular convex shape. More precisely, the first annular portion 11 and the guide groove 6 have cross sections with a semi-circular shape, respectively convex and concave, having the same radius of curvature R.

The supporting wheel 5 comprises inside the guide groove 6 a central annular channel 7, having a section, for example rectangular, which defines and separates two facing and opposite side walls 6a of the guide groove 6, arranged to abut and support the first annular portion 11 of the external peripheral edge 10. In particular, the central annular channel 7 during the operation of the wrapping machine 1 prevents the first annular portion 11 from abutting the bottom of the guide groove 6, i.e. prevents the weight of the rotating ring 11 from entirely weighing on a limited portion of a bottom wall of the guide groove 6. Differently, thanks to the central annular channel 7, the weight of the rotating ring 3 is evenly distributed on the two opposite side walls 6a of the guide groove 6 of each supporting wheel 5.

As verified by the applicant following tests and trials, this solution with guide groove 6 provided with central annular channel 7 considerably reduces consumption and wear of the supporting wheel 5 and generation of residues and particles of plastic material during the operation of the wrapping machine 1.

One or more supporting wheels 5 are adjustably fixed to the supporting frame 2 in order to vary a distance of said supporting wheels 5 from the external peripheral edge 10 and to adjust the position of the rotating ring 3, in particular to recover any play that emerged during the assembly procedure of the wrapping machine 1.

In the embodiment illustrated by way of example, the wrapping machine 1 comprises four supporting wheels 5 of which two, for example the upper ones, are mounted eccentrically on the supporting frame 2 so as to be able to vary their distance from the external peripheral edge 10 of the rotating ring 3 in response to rotation (around a fixing pin of the supporting frame 2).

The supporting wheels 5 are also fixed to the supporting frame 2 angularly spaced apart from each other at the same angle α with reference to the wrapping axis X. In the illustrated embodiment the four supporting wheels 5 are angularly spaced apart from each other by an angle α equal to 90°.

In order to reduce consumption and wear, the supporting wheels 5 are made of plastic material with a low friction coefficient, for example of a polyamide containing glass fibres, in particular Polyamide 66 containing a percentage of glass fibres between 20 and 40%. Drive means 15 are provided for rotating the rotating ring 3 about the wrapping axis X. The drive means 15 comprise an endless flexible element 16, for example a belt, wrapped around the external peripheral edge 10 of the rotating ring 3, moved by a pulley 17 driven by a motor 18, for example a rotating electric motor. The drive means 15 also comprise an adjustment pulley 19 adjustably fixed to the supporting frame 2 and arranged to abut and put in tension the flexible element 16.

The external peripheral edge 10 comprises a second annular portion 12 adjacent to the first annular portion 11 and provided with an annular seat 13 suitable to receive and engage the flexible element 16. The annular seat 13 in cross section has for example a trapezoidal shape for receiving and coupling with a corresponding flexible element 16 with a trapezoidal section.

The second annular portion 12 has a second external diameter D2 that is smaller than a first external diameter D1 of the first annular portion 11. In this way, the flexible element 16 that is wrapped around the second annular portion 12 does not interfere with the supporting wheels 5. That facilitates adjustment and/or maintenance operations on the supporting wheels 5 and on the flexible element 16.

The wrapping machine 1 also comprises a cylindrical covering element 8, coaxially connected to the rotating ring 3, in particular connected to an inner peripheral edge 14 of the rotating ring 3. The covering element 8, which is made for example of sheet metal, comprises a flange 8a. A plurality of junction bars 9 connect the flange 8a, and thus the covering element 8, to the rotating ring 3.

The covering element 8 is intended to delimit a wrapping volume V within which the unwinding unit 4 moves, i.e. inside which a product is wrapped with the film supplied by said unit.

The wrapping machine 1 also includes a pair of transporters or conveyors 25, for example two motorized roller conveyors of known type and not described in detail, arranged on both sides of the rotating ring 3 to allow the movement through the rotating ring 3 of the product 100 to be wrapped.

During the operation of the wrapping machine 1 of the invention, in particular during a wrapping cycle, the product 100 is advanced by the conveyors 25 through and inside the rotating ring 3 rotated about the wrapping axis X by the drive means 15. In this way, the unwinding unit 4 rotating with the rotating ring 3 and dispensing the film 50 allows the product 100 to be wrapped with the film.

The rotating ring 3 is supported radially and axially by the supporting wheels 5 since the first annular portion 11 of the external peripheral edge 10 of the rotating ring 3 is engaged in the guide grooves 6 of the supporting wheels 5 having a semi-circular shape. These guide grooves, besides constraining the rotating ring 3 in the radial direction, that is preventing its displacement in the direction orthogonal to the wrapping axis X, also prevent the displacement of the rotating ring in a direction parallel to the wrapping axis X. Furthermore, since the guide grooves 6 and the first annular portion 11 have a complementary semi-circular shape, the coupling between the supporting wheels 5 and the rotating ring 3 is very precise and free of play, in particular in the axial direction, ensuring over time a smooth and precise operation, without vibrations and oscillations of the rotating ring 3.

In addition, this coupling also guarantees an uniform distribution of the radial and axial loads during the rotation of the rotating ring 3, in particular during the wrapping of the load 100 with the film 50, allowing reduction of the consumption and wear of the supporting wheels 5 and reduction of generation of residues and particles of plastic material from the supporting wheels during operation. This result is also obtained by virtue of the central annular channel 7 in the guide groove 6 of each supporting wheel 5 which defines and separates the two facing and opposite side walls 6a on which the weight of the rotating ring 3 is uniformly distributed.

In this way, the wrapping machine 1 of the invention requires infrequent maintenance works. The rotating ring 3 is rotated by the flexible element 16 moved by the drive pulley 17 driven by the motor 18. The flexible element 16 is wrapped around and engages the annular seat 13 of the second annular portion 12 of the external peripheral edge 10 adjacent to the first annular portion 11. In this way, it is easy to replace the flexible element 16 during maintenance.

## Claims

1. Wrapping machine (1) for wrapping a film (50) around a product (100), comprising:
- a supporting frame (2);
- a rotating ring (3) rotatably supported by said supporting frame (2) so as to rotate about a substantially horizontal wrapping axis (X);
- a plurality of supporting wheels (5) fixed to said supporting frame (2) free to rotate, in particular about respective rotation axes parallel to said wrapping axis (X), and configured to rotatably support said rotating ring (3) by engaging an external peripheral edge (10) thereof;
- an unwinding unit (4) that is fixed to said rotating ring (3), supports a reel (50) of film (100) and is provided with roller means (20) to unwind said film (50);
- drive means (15) for rotating said rotating ring (3) about said wrapping axis (X) and comprising at least a flexible element (16) wrapped around said external peripheral edge (10) of said rotating ring (3) and moved by a pulley (17) driven by a motor (18);
wherein said external peripheral edge (10) comprises a first annular portion (11) and an adjacent second annular portion (12), each supporting wheel (5) comprising an annular guide groove (6) having a cross section with a semi-circular shape and suitable to receive and engage said first annular portion (11) of said external peripheral edge (10) having cross section with a semi-circular shape and complementary to the cross section of said annular guide groove (6), said second annular portion (12) of said peripheral edge (10) being provided with an annular seat (13) suitable for receiving said flexible element (16) and having a second external diameter (D2) smaller than a first external diameter (D1) of said first annular portion (11).

2. Wrapping machine (1) according to claim 1, wherein said guide groove (6) comprises inside a central annular channel (7), which separates two opposite side walls (6a) of said guide groove (6) arranged to abut said first annular portion (11) of said external peripheral edge (10).

3. Wrapping machine (1) according to claim 1 or 2, comprising at least one supporting wheel (5) that is adjustably fixed to said supporting frame (2) in order to vary a distance thereof from said external peripheral edge (10).

4. Wrapping machine (1) according to any preceding claim, wherein said supporting wheels (5) are fixed angularly spaced apart at the same angle (α) with reference to the wrapping axis (X).

5. Wrapping machine (1) according any preceding claim, wherein said supporting wheels (5) are made of plastic material, in particular of polyamide containing glass fibers.

6. Wrapping machine (1) according to any preceding claim, wherein said first annular portion (11) and said guide groove (6) have semi-circular cross-section shape, respectively convex and concave, having the same radius of curvature (R).

7. Wrapping machine (1) according to any preceding claim, comprising a cylindrical covering element (8), coaxially connected to said rotating ring (3), suitable to delimit a wrapping volume (V) within which the unwinding unit (4) moves, in particular said covering element (8) being connected to an inner peripheral edge (14) of said rotating ring (3).

## Patentansprüche

1. Einwickelmaschine (1) zum Wickeln einer Folie (50) um ein Produkt (100), aufweisend:
- einen Stützrahmen (2);
- einen Drehring (3), der von dem Stützrahmen (2) drehbar gelagert ist, so dass er sich um eine im Wesentlichen horizontale Wickelachse (X) dreht;
- eine Mehrzahl von Stützrädern (5), die an dem Stützrahmen (2) befestigt sind, frei drehbar sind, insbesondere um jeweilige Drehachsen parallel zu der Wickelachse (X), und ausgebildet sind, den Drehring (3) drehbar zu stützen, indem sie an einem äußeren Umfangsrand (10) desselben angreifen;
- eine Abwickeleinheit (4), die an dem Drehring (3) befestigt ist, eine Rolle (50) Folie (100) trägt und mit Walzenmitteln (20) zum Abwickeln der Folie (50) versehen ist;
- Antriebsmittel (15) zum Drehen des Drehrings (3) um die Wickelachse (X), die mindestens ein flexibles Element (16) aufweisen, das um den äußeren Umfangsrand (10) des Drehrings (3) gewickelt ist und von einer Riemenscheibe (17) bewegt wird, die von einem Motor (18) angetrieben wird;
wobei der äußere Umfangsrand (10) einen ersten ringförmigen Abschnitt (11) und einen benachbarten zweiten ringförmigen Abschnitt (12) aufweist, wobei jedes Stützrad (5) eine ringförmige Führungsnut (6) mit einem Querschnitt in Halbkreisform aufweist, die ausgebildet ist, den ersten ringförmigen Abschnitt (11) des äußeren Umfangsrands (10) aufzunehmen und in Eingriff zu bringen mit einem Querschnitt in Halbkreisform, der komplementär zu dem Querschnitt der ringförmigen Führungsnut (6) ist, wobei der zweite ringförmige Abschnitt (12) des Umfangsrands (10) mit einem ringförmigen Sitz (13) versehen ist, der zum Aufnehmen des flexiblen Elements (16) ausgebildet ist und einen zweiten Außendurchmesser (D2) besitzt, der kleiner ist als ein erster Außendurchmesser (D1) des ersten ringförmigen Abschnitts (11).

2. Einwickelmaschine (1) nach Anspruch 1, wobei die Führungsnut (6) im Inneren einen zentralen ringförmigen Kanal (7) aufweist, der zwei gegenüberliegende Seitenwände (6a) der Führungsnut (6) trennt, die so angeordnet sind, dass sie an den ersten ringförmigen Abschnitt (11) des äußeren Umfangsrands (10) anstoßen.

3. Einwickelmaschine (1) nach Anspruch 1 oder 2, aufweisend mindestens ein Stützrad (5), das an dem Stützrahmen (2) einstellbar befestigt ist, um einen Abstand desselben von dem äußeren Umfangsrand (10) zu variieren.

4. Einwickelmaschine (1) nach einem der vorstehenden Ansprüche, wobei die Stützräder (5) in dem gleichen Winkel (α) in Bezug auf die Wickelachse (X) winklig beabstandet befestigt sind.

5. Einwickelmaschine (1) nach einem der vorstehenden Ansprüche, wobei die Stützräder (5) aus Kunststoffmaterial, insbesondere aus glasfaserverstärktem Polyamid, bestehen.

6. Einwickelmaschine (1) nach einem der vorstehenden Ansprüche, wobei der erste ringförmige Abschnitt (11) und die Führungsnut (6) einen halbkreisförmigen Querschnitt besitzen, der konvex bzw. konkav ist und denselben Krümmungsradius (R) besitzt.

7. Einwickelmaschine (1) nach einem der vorstehenden Ansprüche, aufweisend ein zylindrisches Abdeckelement (8), das koaxial mit dem Drehring (3) verbunden ist und ausgebildet ist, ein Wickelvolumen (V) zu begrenzen, in dem sich die Abwickeleinheit (4) bewegt, insbesondere wobei das Abdeckelement (8) mit einem inneren Umfangsrand (14) des Drehrings (3) verbunden ist.

## Revendications

1. Enveloppeuse (1) pour envelopper un film (50) autour d'un produit (100), comprenant :
- un cadre de support (2) ;
- une bague rotative (3) supportée en rotation par ledit cadre de support (2) de manière à tourner autour d'un axe d'enveloppement (X) sensiblement horizontal ;
- une pluralité de roues de support (5) fixées audit cadre de support (2) libres de tourner, en particulier autour d'axes de rotation respectifs parallèles audit axe d'enveloppement (X), et conçues pour supporter en rotation ladite bague rotative (3) en mettant en prise un bord périphérique externe (10) de celle-ci ;
- une unité de déroulement (4) qui est fixée à ladite bague rotative (3), qui supporte une bobine (50) de film (100) et est pourvue de moyens de rouleau (20) pour dérouler ledit film (50) ;
- des moyens d'entraînement (15) pour faire tourner ladite bague rotative (3) autour dudit axe d'enveloppement (X) et comprenant au moins un élément flexible (16) enveloppé autour dudit bord périphérique externe (10) de ladite bague rotative (3) et déplacé par une poulie (17) entraînée par un moteur (18) ;
dans laquelle ledit bord périphérique externe (10) comprend une première portion annulaire (11) et une seconde portion annulaire (12) adjacente, chaque roue de support (5) comprenant une rainure de guidage annulaire (6) présentant une coupe transversale de forme semi-circulaire et adaptée pour recevoir et mettre en prise ladite première portion annulaire (11) dudit bord périphérique externe (10) présentant une coupe transversale de forme semi-circulaire et complémentaire de la coupe transversale de ladite rainure de guidage annulaire (6), ladite seconde portion annulaire (12) dudit bord périphérique (10) étant pourvue d'un siège annulaire (13) adapté pour recevoir ledit élément flexible (16) et ayant un second diamètre externe (D2) inférieur à un premier diamètre externe (D1) de ladite première portion annulaire (11).

2. Enveloppeuse (1) selon la revendication 1, dans laquelle ladite rainure de guidage (6) comprend à l'intérieur un canal annulaire central (7), qui sépare deux parois latérales opposées (6a) de ladite rainure de guidage (6) agencées pour venir buter contre ladite première portion annulaire (11) dudit bord périphérique externe (10).

3. Enveloppeuse (1) selon la revendication 1 ou 2, comprenant au moins une roue de support (5) qui est fixée de manière réglable audit cadre de support (2) afin de faire varier une distance de celle-ci par rapport audit bord périphérique externe (10).

4. Enveloppeuse (1) selon une quelconque revendication précédente, dans laquelle lesdites roues de support (5) sont fixées de manière angulairement espacée selon le même angle (α) par rapport à l'axe d'enveloppement (X).

5. Enveloppeuse (1) selon une quelconque revendication précédente, dans laquelle lesdites roues de support (5) sont constituées de matière plastique, en particulier de polyamide contenant des fibres de verre.

6. Enveloppeuse (1) selon une quelconque revendication précédente, dans laquelle ladite première portion annulaire (11) et ladite rainure de guidage (6) ont une coupe transversale semi-circulaire, respectivement convexe et concave, ayant le même rayon de courbure (R).

7. Enveloppeuse (1) selon une quelconque revendication précédente, comprenant un élément de recouvrement cylindrique (8), relié coaxialement à ladite bague rotative (3), adapté pour délimiter un volume d'enveloppement (V) dans lequel se déplace l'unité de déroulement (4), en particulier ledit élément de recouvrement (8) étant relié à un bord périphérique intérieur (14) de ladite bague rotative (3).
